# EUROPÄISCHE PATENTANMELDUNG

(11) **EP 2 175 170 A2**
(43) Veröffentlichungstag der Anmeldung: **14.04.2010**
(21) Anmeldenummer: 09170793.5
(22) Anmeldetag: 21.09.2009
(51) Int. Cl.: F16H 57/04

(54) **Kühlkreislauf eines Getriebes**

(30) Priorität: 09.10.2008 DE 102008042704
(71) Anmelder: ZF Friedrichshafen AG, 88038 Friedrichshafen (DE)
(72) Erfinder: Wandl, Meiko, 94110 Wegscheid (DE)

(57) **Zusammenfassung**

Es wird ein Kühlkreislauf eines Getriebes (3) vorgeschlagen, umfassend einen Kühler (1), eine Rückleitung (2) vom Kühler (1) zum Getriebe (3) und eine Zuleitung (4) vom Getriebe (3) zum Kühler (1), in den ein Magnetventil (5) integriert ist, welches in Abhängigkeit der Getriebetemperatur derart geregelt wird, dass, wenn die Getriebetemperatur unterhalb eines vorgegebenen Schwellenwertes liegt oder wenn die Getriebetemperatur den vorgegebenen Schwellenwert für eine Zeit überschreitet, die geringer ist, als eine vorgegebene Zeit, der Kühlmittelrückfluss zum Kühler (1) in Abhängigkeit von der Anordnung des Magnetventils (5) im Kühlkreislauf ganz oder teilweise unterbrochen wird.

## Beschreibung

Die vorliegende Erfindung bezieht sich auf einen Kühlkreislauf eines Getriebes, insbesondere eines Getriebes eines landwirtschaftlichen Fahrzeugs gemäß dem Oberbegriff des Patentanspruchs 1.

Aus dem Stand der Technik ist bekannt, bei Traktorengetrieben, beispielsweise bei leistungsverzweigten Getrieben oder Lastschaltgetrieben zum Zweck einer schnelleren Erwärmung des Getriebes auf Betriebstemperatur bzw. zur Absicherung des Kühlers, ein Kühlerbypassventil zu verwenden. Hierbei ist vorgesehen, dass, wenn der Druck des Kühlmediums bzw. Öls höher als ein vorgegebener Schwellenwert ist (in der Regel liegt der Schwellenwert im Intervall 3 - 5 bar), was auf kaltes Kühlmedium bzw. Öl schließen lässt, dass das Kühlmedium bzw. Öl über einen Bypass direkt zurück ins Getriebe fließt.

Wenn der Druck des Kühlmediums bzw. Öls geringer ist, als der vorgegebene Schwellenwert, was auf warmes Kühlmedium bzw. Öl schließen lässt, fließt das Kühlmedium bzw. Öl über den Kühler und gelangt anschließend wieder ins Getriebe.

Durch die beschriebene Vorgehensweise wird eine indirekt gesteuerte Temperaturregelung des Kühlkreislaufs eines Getriebes geschaffen. Hierbei erweist sich die Auslegung dieses Systems als problematisch, da die Leitungsquerschnitte und das Bypassventil genau auf den Kühler abgestimmt werden müssen, damit das Bypassventil in einem bestimmten gewünschten Temperaturbereich öffnet. Abgesehen vom hohen Entwicklungsaufwand, ist die Temperaturregelung ungenau, was in einem schlechten Wirkungsgrad des Getriebes und in einem damit verbundenen hohen Kraftstoffverbrauch, insbesondere bei einem Kaltstart, resultiert.

Um dieses Problem zu vermeiden, wird bei einigen Fahrzeugen, insbesondere bei Schleppern, ein mechanisches Thermostat zur Temperaturregelung verwendet; diese Lösung ist in nachteiliger Weise kostenintensiv und aus diesem Grunde nicht weit verbreitet.

Aus der DE 19932096 A1 der Anmelderin ist ein hydraulisches System zur Filterung von Druckflüssigkeit von hydraulischen Verbrauchern bekannt, bei dem Druckflüssigkeit von einer Pumpe über ein Filterelement zu hydraulischen Verbrauchern gefördert wird. Bei dem bekannten System wird unabhängig von einem Druckniveau vor dem Filterelement unterhalb eines vorgegebenen Temperaturniveaus ein Teil der Druckflüssigkeit von der Pumpe direkt zu den Verbrauchern gefördert, wobei oberhalb eines vorgegebenen Druckniveaus die geförderte Druckflüssigkeit über das Filterelement zu den Verbrauchern gefördert wird.

Zu diesem Zweck umfasst das bekannte System ein Ventil, welches zwischen dem Filterelement und der Pumpe angeordnet ist, wobei im Ventil über ein Element, dessen Volumen sich in Abhängigkeit der Temperatur ändert, ein Schieber betätigt wird, über den die Pumpe entweder mit dem Filterelement oder mit Verbrauchern verbindbar ist. Treten vor dem Filterelement Druckspitzen auf, so werden diese über ein mit Federkraft beaufschlagtes Rückschlagventil abgebaut, um das Filterelement zu schützen. Durch das im Rahmen der DE 19932096 A1 beschriebene System soll bei kalter Druckflüssigkeit mit entsprechend höherer Viskosität das Filterelement geschützt werden; zudem soll gewährleistet werden, dass den Verbrauchern unabhängig von der Temperatur ausreichend Druckflüssigkeit zur Verfügung steht.

Der vorliegenden Erfindung liegt die Aufgabe zugrunde, einen Kühlkreislauf eines Getriebes anzugeben, welcher es ermöglicht, dass das Getriebe schnell auf Betriebstemperatur erwärmt, der Wirkungsgrad verbessert und Kraftstoff gespart werden kann. Hierbei soll die erfindungsgemäße Lösung kostengünstig realisierbar und einfach implementierbar sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Kühlkreislauf eines Getriebes vorgeschlagen, umfassend einen Kühler, eine Zuleitung vom Getriebe zum Kühler und eine Rückleitung vom Kühler zum Getriebe, in den ein Magnetventil integriert ist, welches in Abhängigkeit der Getriebetemperatur derart gesteuert wird, dass, wenn die Getriebetemperatur unterhalb eines vorgegebenen Schwellenwertes liegt, der Kühlmittelzufluss zum Kühler in Abhängigkeit von der Anordnung des Magnetventils im Kühlkreislauf ganz oder teilweise unterbrochen wird.

Gemäß einer ersten Ausführungsform der Erfindung ist das Magnetventil als 3/2 -Magnetventil ausgeführt und in der Zuleitung zwischen dem Getriebe und dem Kühler angeordnet, wobei eine mit dem Magnetventil verbundene Bypass-Leitung vorgesehen ist, über die bei unterbrochenem Kühlmittelzufluss zum Kühler das Öl von der Zuleitung in die Rückleitung zum Getriebe fließt. Hierbei ist in der Rückleitung zum Getriebe ein Rückschlagventil angeordnet, derart, dass das über die Bypass-Leitung strömende Öl nicht in den Kühler zurückfließen kann. Bei dieser Konstruktion ist gewährleistet, dass kein Öl über den Kühler des Kühlkreislaufes fließt, wodurch die Betriebstemperatur des Getriebes schnell erreicht werden kann.

Hierbei wird das Magnetventil durch das Getriebesteuergerät geregelt, wobei der Istwert der Temperatur des Getriebes über einen Getriebetemperatursensor ermittelt wird. Erfindungsgemäß ist vorgesehen, dass, wenn die Getriebetemperatur für eine vorgegebene Zeit einen Schwellenwert überschreitet, das Magnetventil derart gesteuert wird, dass es auf Durchfluss des Öls zum Kühler schaltet und ein Fließen des Öls durch die Bypass-Leitung unterbindet.

Wenn die Getriebetemperatur den vorgegebenen Schwellenwert nicht überschreitet oder wenn die Getriebetemperatur den vorgegebenen Schwellenwert für eine Zeit überschreitet, die geringer ist, als die vorgegebene Zeit, wird das Magnetventil derart gesteuert, dass das Fließen des Öls über die Bypassleitung direkt ins Getriebe ermöglicht und der Durchfluss des Öls zum Kühler unterbunden wird.

Vorzugsweise wird das Magnetventil bestromt, um auf Durchfluss zum Kühler zu schalten und bleibt stromlos, solange die Getriebetemperatur den vorgegebenen Schwellenwert nicht überschreitet bzw. die Getriebetemperatur den vorgegebenen Schwellenwert nicht für eine Zeit überschreitet, die geringer ist, als die vorgegebene Zeit.

Im Rahmen einer weiteren Ausführungsform der Erfindung wird vorgeschlagen, dass das Magnetventil als 2/2 -Magnetventil ausgeführt und in einer Leitung, welche die Zuleitung und die Rückleitung miteinander verbindet angeordnet ist. Hierbei wird ist vorgesehen, dass, wenn die Getriebetemperatur für eine vorgegebene Zeit einen Schwellenwert überschreitet, das Magnetventil derart gesteuert wird, dass kein Durchfluss des Öls über die die Zuleitung und die Rückleitung miteinander verbindende Leitung erfolgt, so dass das Öl durch den Kühler fließt.

Wenn die Getriebetemperatur den vorgegebenen Schwellenwert nicht überschreitet oder wenn die Getriebetemperatur den vorgegebenen Schwellenwert für eine Zeit überschreitet, die geringer ist, als die vorgegebene Zeit, wird das Magnetventil derart gesteuert, dass das Öl durch die die Zuleitung und die Rückleitung miteinander verbindende Leitung fließen kann, wodurch ein Teil des Öls direkt ins Getriebe zurückfließt.

Bei dieser Ausführungsform wird vorzugsweise das Magnetventil bestromt, um den Durchfluss des Öls über die die Zuleitung und die Rückleitung miteinander verbindende Leitung zu unterbinden und bleibt stromlos, solange die Getriebetemperatur den vorgegebenen Schwellenwert nicht überschreitet bzw. die Getriebetemperatur den vorgegebenen Schwellenwert nicht für eine Zeit überschreitet, die geringer ist, als die vorgegebene Zeit.

Durch die erfindungsgemäße Konzeption der elektrohydraulischen Temperaturregelung wird auf einfache und kostengünstige Weise eine schnelle Erwärmung des Getriebes auf Betriebstemperatur ermöglicht, die weitgehend unabhängig von äußeren Einflüssen ist. Im Vergleich zu der aus dem Stand der Technik bekannten Lösung, umfassend ein druckgesteuertes Kühlerbypassventil wird durch die hohe Genauigkeit eine Verbesserung des Wirkungsgrades sowie eine Reduzierung des Kraftstoffverbrauchs erzielt.

Das Getriebe umfassend einen erfindungsgemäßen Kühlkreislauf kann vorzugsweise ein leistungsverzweigtes Getriebe oder ein Lastschaltgetriebe für ein landwirtschaftliches Fahrzeug sein.

Die Erfindung wird im folgenden anhand der beigefügten Figuren beispielhaft näher erläutert. Es zeigen:
- Figur 1:: Eine schematische Darstellung einer ersten erfindungsgemäßen Ausführungsform eines Kühlkreislaufs eines Getriebes; und
- Figur 2:: Eine schematische Darstellung einer zweiten erfindungsgemäßen Ausführungsform eines Kühlkreislaufs eines Getriebes.

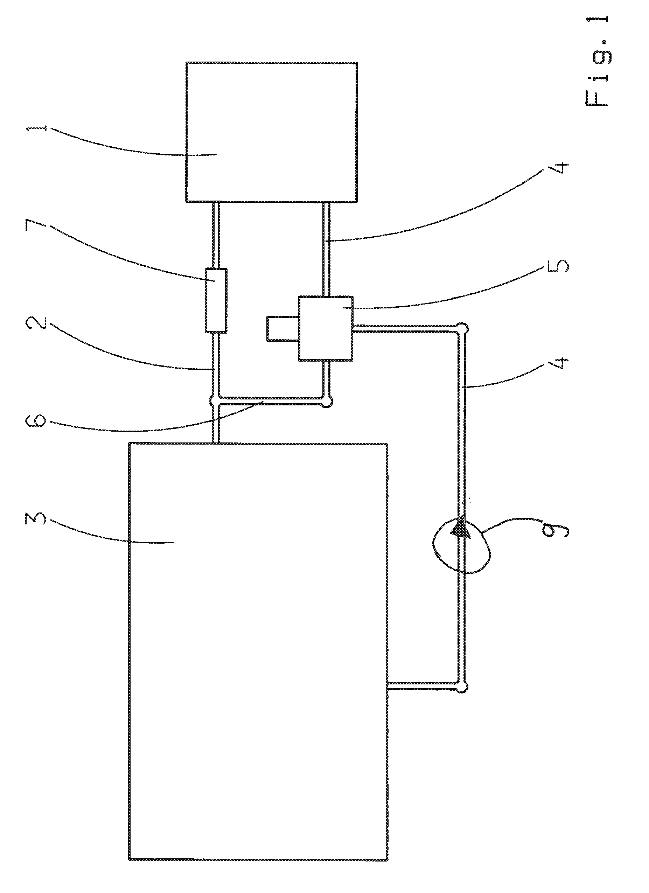

In Figur 1 ist ein Kühlkreislauf eines Getriebes dargestellt, welcher einen Kühler 1 umfasst, der über eine Rückleitung 2 zum Getriebe 3 mit dem Getriebe 3 verbunden ist. Des weiteren umfasst der Kühlkreislauf eine Rückleitung 4 zum Kühler 1. Wie aus Figur 1 ersichtlich, ist in der Zuleitung 4 ein 3/2 - Magnetventil 5 angeordnet, welches mit einer Bypass-Leitung 6 verbunden ist, über die bei unterbrochenem Kühlmittelzufluss zum Kühler 1 das Öl in die Zuleitung 2 zum Getriebe 3 fließt.

Gemäß der Erfindung wird, wenn die Getriebetemperatur für eine vorgegebene Zeit einen Schwellenwert überschreitet, das Magnetventil 5 bestromt, wodurch es auf Durchfluss des Öls zum Kühler 1 schaltet und ein Fließen des Öls durch die Bypass-Leitung 6 unterbindet.

Wenn die Getriebetemperatur den vorgegebenen Schwellenwert nicht überschreitet oder wenn die Getriebetemperatur den vorgegebenen Schwellenwert für eine Zeit überschreitet, die geringer ist, als die vorgegebene Zeit, bleibt das Magnetventil 5 stromlos, wodurch das Öl über die Bypassleitung 6 direkt ins Getriebe 3 zurückfließt. Um zu verhindern, dass das Öl über die Bypassleitung 6 und die Rückleitung 2 zum Getriebe in den Kühler 1 fließt, ist vor dem Kühler 1 ein Rückschlagventil 7 vorgesehen. Ferner ist das Ventil 5 derart ausgeführt, dass ein Fließen des Öls durch die Bypass-Leitung 6 von der Rückleitung 2 in die Zuleitung 4 nicht möglich ist.

Das Ventil 5 kann als einfaches Wegeventil oder als Proportionalventil ausführt sein.

Ein typischer Wert für den Schwellenwert der Getriebetemperatur ist ca. 70°; ferner liegt die vorgegebene Zeit vorzugsweise in der Größenordnung von ca. 1 Minute.

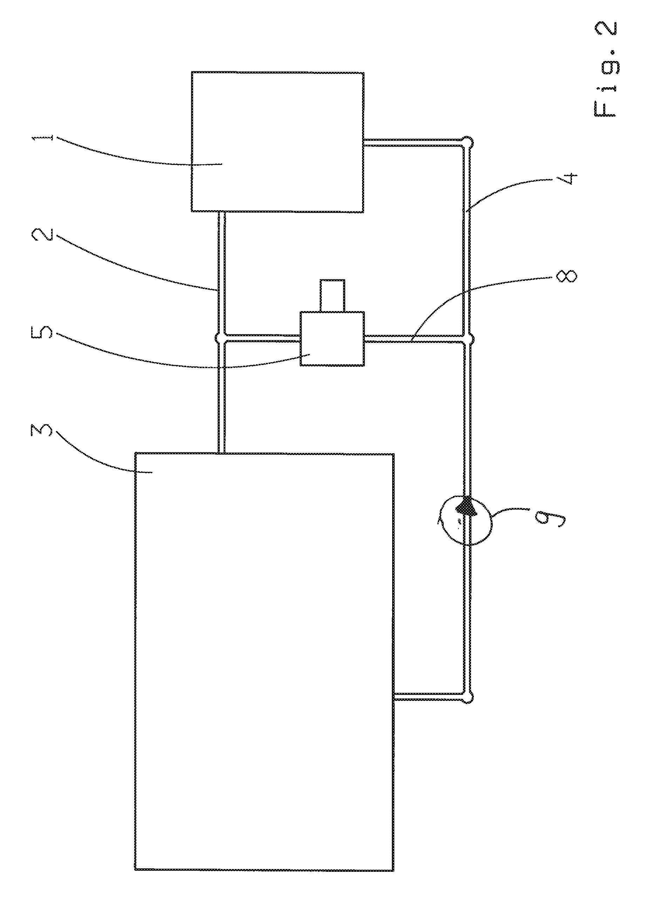

Gegenstand der Figur 2 ist eine Ausführungsform, bei der in einem Kühlkreislauf eines Getriebes 3 umfassend einen Kühler 1, eine Rückleitung 2 vom Kühler 1 zum Getriebe 3 und eine Zuleitung 4 vom Getriebe 3 zum Kühler 1 eine Leitung 8 vorgesehen ist, welche die Zuleitung 4 und die Rückleitung 2 miteinander verbindet, in der ein 2/2 -Magnetventil 5 angeordnet ist.

Hierbei ist vorgesehen, dass, wenn die Getriebetemperatur für eine vorgegebene Zeit einen Schwellenwert überschreitet, das Magnetventil 5 bestromt wird, wodurch kein Durchfluss des Öls über die die Zuleitung 4 und die Rückleitung 2 miteinander verbindende Leitung 8 erfolgt, so dass das Öl durch den Kühler 1 fließt.

Wenn die Getriebetemperatur den vorgegebenen Schwellenwert für eine vorgegebene Zeit nicht überschreitet oder wenn die Getriebetemperatur den vorgegebenen Schwellenwert für eine Zeit überschreitet, die geringer ist, als die vorgegebene Zeit, bleibt das Magnetventil 5 stromlos, wodurch das Öl von der Zuleitung 4 durch die die Zuleitung 4 und die Rückleitung 2 miteinander verbindende Leitung 8 fließen kann, wodurch ein Teil des Öls direkt ins Getriebe 3 zurückfließt. Gemäß der Erfindung kann der Leitungsquerschnitt der Leitung 8 größer sein als der Querschnitt der Zuleitung 4, um zu gewährleisten, dass mehr Öl durch die Leitung 8 fließt als durch den Kühler 1. Das Ventil 5 ist derart ausgeführt, dass ein Fließen des Öls durch die Leitung 8 von der Rückleitung 2 in die Zuleitung 4 nicht möglich ist.

### Bezugszeichen

- 1: Kühler
- 2: Rückleitung
- 3: Getriebe
- 4: Zuleitung
- 5: Magnetventil
- 6: Bypass-Leitung
- 7: Rückschlagventil
- 8: Leitung
- 9: Pumpe

## Patentansprüche

1. Kühlkreislauf eines Getriebes (3) umfassend einen Kühler (1), eine Rückleitung (2) vom Kühler (1) zum Getriebe und eine Zuleitung (4) vom Getriebe (3) zum Kühler (1), **dadurch gekennzeichnet, dass** in den Kühlkreislauf ein Magnetventil (5) integriert ist, welches in Abhängigkeit der Getriebetemperatur derart gesteuert wird, dass, wenn die Getriebetemperatur unterhalb eines vorgegebenen Schwellenwertes liegt oder wenn die Getriebetemperatur den vorgegebenen Schwellenwert für eine Zeit überschreitet, die geringer ist, als eine vorgegebene Zeit, der Kühlmittelrückfluss zum Kühler (1) in Abhängigkeit von der Anordnung des Magnetventils (5) im Kühlkreislauf ganz oder teilweise unterbrochen wird.

2. Kühlkreislauf eines Getriebes (3), nach Anspruch 1, **dadurch gekennzeichnet, dass** ist das Magnetventil (5) als 3/2 -Magnetventil ausgeführt ist und in der Zuleitung (4) angeordnet ist, wobei eine mit dem Magnetventil (5) verbundene Bypass-Leitung (6) vorgesehen ist, über die bei unterbrochenem Kühlmittelrückfluss zum Kühler (1) das Öl von der Zuleitung (4) in die Rückleitung (2) zum Getriebe (3) fließt und wobei in der Rückleitung (2) ein Rückschlagventil (7) angeordnet ist, derart, dass das über die Bypass-Leitung (6) strömende Öl nicht in den Kühler (1) zurückfließen kann.

3. Kühlkreislauf eines Getriebes (3), nach Anspruch 2, **dadurch gekennzeichnet, dass** das Magnetventil (5) derart regelbar ist, dass wenn die Getriebetemperatur für eine vorgegebene Zeit einen Schwellenwert überschreitet, das Magnetventil (5) auf Durchfluss des Öls zum Kühler (1) schaltet und ein Fließen des Öls durch die Bypass-Leitung (6) unterbindet, wobei wenn die Getriebetemperatur den vorgegebenen Schwellenwert nicht überschreitet oder wenn die Getriebetemperatur den vorgegebenen Schwellenwert für eine Zeit überschreitet, die geringer ist, als die vorgegebene Zeit, das Magnetventil (5) das Fließen des Öls über die Bypassleitung (6) direkt ins Getriebe (3) ermöglicht und den Durchfluss des Öls zum Kühler (1) unterbindet.

4. Kühlkreislauf eines Getriebes (3), nach Anspruch 3, **dadurch gekennzeichnet, dass** das Magnetventil (5) bestromt wird, um auf Durchfluss zum Kühler (1) zu schalten und stromlos bleibt, solange die Getriebetemperatur den vorgegebenen Schwellenwert nicht überschreitet bzw. die Getriebetemperatur den vorgegebenen Schwellenwert nicht für eine Zeit überschreitet, die geringer ist, als die vorgegebene Zeit.

5. Kühlkreislauf eines Getriebes (3), nach Anspruch 1, **dadurch gekennzeichnet, dass** das Magnetventil als 2/2 -Magnetventil ausgeführt ist und in einer Leitung (8) angeordnet ist, welche die Zuleitung (4) und die Rückleitung (2) miteinander verbindet.

6. Kühlkreislauf eines Getriebes (3), nach Anspruch 5, **dadurch gekennzeichnet, dass** der Leitungsquerschnit der Leitung (8) größer ist als der Querschnitt der Zuleitung (4).

7. Kühlkreislauf eines Getriebes (3), nach Anspruch 5 oder 6, **dadurch gekennzeichnet, dass** das Magnetventil (5) derart regelbar ist, dass wenn die Getriebetemperatur für eine vorgegebene Zeit einen Schwellenwert überschreitet, kein Durchfluss des Öls über die Leitung (8) erfolgt, wodurch das Öl durch den Kühler (1) fließt, wobei wenn die Getriebetemperatur den vorgegebenen Schwellenwert nicht überschreitet oder wenn die Getriebetemperatur den vorgegebenen Schwellenwert für eine Zeit überschreitet, die geringer ist, als die vorgegebene Zeit, wird das Öl durch die Leitung (8) fließen.

8. Kühlkreislauf eines Getriebes (3), nach Anspruch 7, **dadurch gekennzeichnet, dass** das Magnetventil (5) bestromt wird, um den Durchfluss des Öls über die Leitung (8) zu unterbinden und stromlos bleibt, solange die Getriebetemperatur den vorgegebenen Schwellenwert nicht überschreitet bzw. die Getriebetemperatur den vorgegebenen Schwellenwert nicht für eine Zeit überschreitet, die geringer ist, als die vorgegebene Zeit.

9. Kühlkreislauf eines Getriebes (3), nach einem der vorangehenden Ansprüche, **dadurch gekenntzeichnet, dass** das Magnetventil (5) durch das Getriebesteuergerät regelbar ist.

10. Kühlkreislauf eines Getriebes (3), nach einem der vorangehenden Ansprüche, **dadurch gekennzeichnet, dass** die Getriebetemperatur über einen Getriebetemperatursensor ermittelbar ist.

11. Kühlkreislauf eines Getriebes (3), nach einem der vorangehenden Ansprüche, **dadurch gekennzeichnet, dass** das Getriebe (3) ein leistungsverzweigtes Getriebe oder ein Lastschaltgetriebe für ein landwirtschaftliches Fahrzeug ist.
